# EUROPÄISCHE PATENTSCHRIFT

(11) **EP 1 277 309 B1**
(45) Veröffentlichungstag und Bekanntmachung des Hinweises auf die Patenterteilung: **21.06.2006**
(21) Anmeldenummer: 01933722.9
(22) Anmeldetag: 17.03.2001
(51) Int. Cl.: H04L 12/26, H04L 29/06

(54) **VERFAHREN ZUR ANALYSE GESENDETER PROTOKOLLDATENEINHEITEN**
METHOD FOR ANALYSING TRANSMITTED PROTOCOL DATA UNITS
PROCEDE D'ANALYSE D'UNITES DE DONNEES DE PROTOCOLE ENVOYEES

(30) Priorität: 13.04.2000 DE 10018288
(43) Veröffentlichungstag der Anmeldung: 22.01.2003
(73) Patentinhaber: Deutsche Telekom AG, 53113 Bonn (DE)
(72) Erfinder: DASSOW, Heiko, 64347 Griesheim (DE); KÖPPE, Guido, 64347 Griesheim (DE)
(86) Internationale Anmeldenummer: PCT/EP2001/003076
(87) Internationale Veröffentlichungsnummer: WO 2001/079991

(56) Entgegenhaltungen:
- DE-A- 19 936 118
- SCALLAN T.: "Monitoring and Diagnostics of CORBA Systems" JAVA DEVELOPERS JOURNAL.COM, [Online] 1. - 30. Juni 2000, Seiten 138-144, XP002182426 Gefunden im Internet: <URL:http://www.segue.com/html/s_news/rece nt_articles/JDJarticle-Jun2000.pdf> [gefunden am 2001-11-09]
- "NON-INTRUSIVE OBJECT TESTING IN A PRODUCTION ENVIRONMENT" IBM TECHNICAL DISCLOSURE BULLETIN, IBM CORP. NEW YORK, US, Bd. 39, Nr. 12, 1. Dezember 1996 (1996-12-01), Seite 129 XP000686040 ISSN: 0018-8689
- GONSALVES A.: "Tools upgrade CORBA tests" ZDNET NEWS, [Online] 20. - 20. Juni 1999, Seiten 1-2, XP002182427 Gefunden im Internet: <URL:http://www.zdnet.com/zdnn/stories/new s/0,4586,407245,00.html> [gefunden am 2001-11-09]
- MINTON G: "IIOP specification: a closer look" UNIX REVIEW, SAN FRANCISCO, CA, US, Bd. 15, Nr. 1, Januar 1997 (1997-01), Seiten 41-44,46,48,50, XP002102559
- CALRS G.; YING LU; ASCHEMANN G.: 'Validating Interaction Patterns of CORBA Based Network Management Systems' CONFERENCE PROCEEDINGS ARTICLE 10 April 2000, Seiten 31 - 44, XP010376673

## Beschreibung

Die Erfindung betrifft ein Verfahren zur Analyse gesendeter Protokolldateneinheiten (PDUs) nach dem Oberbegriff des Patentanspruchs 1.

Verfahren zur Analyse gesendeter Protokolldateneinheiten eines allgemeinen Protokolls zur Kommunikation zwischen Object Request Broker (ORB) zum Zwecke der möglichst vollständigen Darstellung der enthaltenden Nachrichten sind grundsätzlich bekannt.

CORBA ist in "Wissen", Seiten 108-113 in dem Artikel "CORBA, übernehmen Sie", Services: Basisdienste für den ORB, von Uwe Seimet beschrieben. Ebenso wurde es in einer Veröffentlichung mit dem Titel "Validating Interaction Patterns of CORBA Based Network Management Systems" von Guido Carls, Gerd Aschemann und Ying Lu im Rahmen von "NOMS 2000, 2000 IEEE/IFIP, Network and Management Symposium" "The Networked Planet: Management Beyond 2000", 10. - 14. April 2000, Hilton Hawaiian Village, Honolulu, Hawaii, beschrieben und dient zur Verteilung von Applikation über mehrere Betriebssystem-Prozesse. Es ermöglicht die hersteller- und hostübergreifende Kommunikation verteilter Applikationen untereinander. Es wird dabei zwischen der Client- und der Server-Rolle unterschieden. Eine Applikation in der Client-Rolle versendet eine Anfrage an eine andere Applikation, die in der Server-Rolle arbeitet. Diese Anfrage wird von der Applikation in der Server-Rolle bearbeitet und eine entsprechende Antwort wird zurück an den Client geschickt. Als Protokoll zum Transport dieser Nachrichten wird das allgemeine Protokoll zur Kommunikation zwischen zwei Object Request Broker eingesetzt. In TCP/IPbasierten Netzen wird dessen Spezialform, das sogenannte Internet Inter-ORB-Protokoll (IIOP), verwendet. Die Information, welche Inhalte zwischen Client und Server ausgetauscht werden können, wird mittels einer objektorientierten Schnittstellenbeschreibungssprache (IDL) festgelegt.

Im Falle eines unerwarteten Verhaltens einer verteilten Applikation oder bei deren Abnahme kann es notwendig sein, die Kommunikation zwischen Client und Server zu beobachten, um daraus Rückschlüsse auf das Verhalten der einzelnen Applikationskomponenten ziehen zu können. Aus der obengenannten Literaturstelle sind zum Beispiel folgende Verfahren bekannt:
- Die verteilte Applikation kann auf der Client- oder der Server-Seite derart erweitert werden, daß die ausgetauschten GIOP-Nachrichten zusätzlich ganz oder teilweise an eine zur Aufzeichnung und Auswertung bestimmte Komponente der verteilten Applikation weitergeleitet werden;
- die zwischen Client und Server ausgetauschten PDUs können mittels eines Trace Tools aufgezeichnet und mittels zusätzlicher Kenntnisse über die Art der ausgetauschten Nachrichten und der eingesetzten Produkte decodiert werden. Das Decodieren der Nachrichten kann manuell oder automatisiert erfolgen;
- eine ausschließlich für Testzwecke entwickelte Applikation wird zwischen Client und Server in die Kommunikation eingebunden. Diese Applikation empfängt als Server einen Request vom Client und leitet diesen als Client an den Server weiter. Entsprechend wird die Antwort zurückgeleitet. Dies hat zur Folge, daß alle PDUs durch diese Testapplikation beobachtet und ausgewertet werden können.

Diese bekannten Verfahren haben den Nachteil, daß das alleinige passive Aufzeichnen der zwischen Client und Server ausgetauschten General Inter ORB Protokoll (GIOP)-PDUs nicht ausreichend ist, um die Nachricht vollständig zu decodieren. Dies resultiert aus mehreren Ursachen, die nachfolgend aufgezeigt werden:
- Es werden in der Regel nur die Werte, zum Beispiel 123, nicht jedoch deren Typcode, zum Beispiel ganze Zahl, in einer GIOP-PDU codiert. Daher läßt sich lediglich anhand einer PDU nicht bestimmen, wieviele Parameter die PDU enthält und von welchem Typ die Werte sind.
- Der Name der aufgerufenen Methode wird nicht in seinem vollen Kontext in einem Aufruf codiert. Es fehlt eine eindeutige Bezeichnung der Interface Definition, in dem diese Methode deklariert ist. Sollten gleichlautende Methoden in unterschiedlichen Interface Definitionen mit unterschiedlichen Signaturen definiert worden sein, so ist es bei gleicher Länge der Wertcodierung nicht möglich, die tatsächlich codierte Methode zu identifizieren.
- Während der Agent auf der Serverseite über die selbsterstellte und publizierte "Zieladresse" in der Lage ist, ankommende Anfragen einem bestimmten CORBA-Objekt zuzuordnen, kann ein Trace Tool gemäß CORBA-Standard den Inhalt der Zieladresse oder "Target Address" lt. Verzeichnis zwar auf Gleichheit prüfen, jedoch keine Zuordnung auf ein konkretes Objekt und der dem Objekt zugrundeliegenden Interface Definition vornehmen. Nur unter Zurhilfenahme herstellerspezifischer Erweiterungen des CORBA-Standards lassen sich mit einem Trace Tool Informationen aus dem Inhalt einer Targetadresse gewinnen.
- Es ist in CORBA vorgesehen, daß eine Objektreferenz unter Umgehung des GIOP-Protokolls vom Server an den Client übergeben wird, zum Beispiel als Textfile auf Diskette. Wenn diese als interoperable Objektreferenz (IOR), die zur eindeutigen Adressierung von CORBA-Objekten auf der Basis des IIOP-Protokolls dient, ausgetauschte Objektreferenz auch Informationen über die zugehörige Interface Definition enthält, wird diese Information in der Regel nie wieder zwischen Client und Server ausgetauscht. Es besteht für einen CORBA-Trace Tool somit keine Möglichkeit, diese Informationen ohne aktives Abfragen der an der Kommunikation beteiligten Applikationskomponenten zu erhalten. Dies würde jedoch gegen das Paradigma verstoßen, daß ein Trace Tool nur passiv beobachten darf.

Damit besteht das Problem, daß eine einzelne GIOP-PDU zwar in dem im client- und serverbekannten Kontext eindeutig eingeordnet und decodiert werden kann, aber keine eindeutige und standardkonforme Möglichkeit besteht, um eine aufgezeichnete PDU außerhalb dieses bekannten Kontextes zu decodieren.

Der Erfindung liegt deshalb die Aufgabe zugrunde, ein Verfahren zur Analyse gesendeter Protokolldateneinheiten eines allgemeinen Protokolls zur Kommunikation zwischen zwei Object Request Brokern zu schaffen, die die Kommunikation zwischen CORBA-Client und -Server steuern bzw. ermöglichen und zwar zum Zweck der möglichst vollständigen Darstellung der enthaltenden Nachrichten, wodurch es möglich sein soll, ohne Veränderung der Client- und Server-Implementation lediglich durch hinreichend langes passives Mitlesen der ausgetauschten GIOP-PDUs die übertragenen Nachrichten vollständig zu decodieren.

Die erfindungsgemäße Lösung der Aufgabe ist im Kennzeichen des Patentanspruchs 1 charakterisiert.

Weitere Lösungen bzw. Ausgestaltungen der Erfindung sind in dem Kennzeichen der Patentansprüche 2 bis 11 charakterisiert.

Durch das erfindungsgemäße Verfahren ergibt sich der Vorteil, daß es möglich ist, ohne Veränderungen in der Client- und Server-Implementierung durch das hinreichend lange passive Mitlesen der ausgetauschten GIOP-PDUs die übertragenen Nachrichten vollständig zu decodieren. Erreicht wird dies dadurch, indem in einer Art Lernphase die ausgetauschten Nachrichten systematisch ausgewertet und korreliert werden, so daß Mehrdeutigkeiten, die bei der Decodierung einer einzelnen Nachricht vorkommen können, ausgeschlossen werden.

Somit ist auch eine eindeutige und standardkonforme Lösung geschaffen worden, die es ermöglicht, eine aufgezeichnete Protokolldateneinheit außerhalb dieses bekannten Kontextes zu decodieren.

Weitere Vorteile, Merkmale und Anwendungsmöglichkeiten des vorliegenden Verfahrens zur Analyse gesendeter GIOP-PDUs zum möglichst vollständigen Darstellen der enthaltenen Nachrichten ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: Einsatz eines passiven GIOP-Decoders am Beispiel des Internet Inter-ORB-Protokolls (IIOP);
- Fig. 2: Trace Schnittstelle für eine über TCP/IP übertragene GIOP Nachricht;
- Fig. 3: eine Darstellung einer aufgezeichneten GIOP Nachricht;
- Fig. 4: IDL Definition eines Interfaces;
- Fig. 5: eine manuell dekodierte GIOP Nachricht und
- Fig. 6: UML Darstellung einer hierarchischen Interface Definition.

Im nachfolgenden werden folgende Begriffe verwendet, die hier kurz erklärt bzw. definiert werden sollen:
- CORBA: Common Object Request Broker Architecture:
Definition eines Frameworks zur Host-übergreifenden Verteilung einer Applikation.
- GIOP: General Inter-ORB Protokoll:
Allgemeines Protokoll zur Kommunikation zwischen zwei ORBs.
- ORB: Object Request Broker:
Ermöglicht die Kommunikation zwischen CORBA-Client und -Server.
- IIOP: Internet Inter-ORB Protokoll:
Anwendung von GIOP für TCP/IP basierte Netze.
- IIOP-PDU: Internet Inter-ORB Protokoll-Dateneinheit
- PDU: Protokoll-Dateneinheit/Protocol Data Unit:
Eine binär codierte Nachricht, die zwischen einem Sender und einem Empfänger ausgetauscht wird.
- Nachricht: Eine Information, die als PDU übertragen wird, wobei die Semantik der Information im Vordergrund steht und weniger die Art der Codierung.
- TCP/IP: Transmission Control Protocol/Internet Protocol (allgemein verwendetes Internet-Protokoll).
- UML: Unified Modeling Language
- Host: Rechner auf dem ein Teil einer verteilten Applikation läuft, der über eine eindeutige Adresse angesprochen werden kann.
- Port: Logische Unterteilung einer Adresse, die das Aufbauen von Verbindungen zu mehreren unterschiedlichen Agenten innerhalb eines Hosts ermöglicht.
- Agent: Eine Instanz, die für das Versenden und Empfangen von GIOP Nachrichten zuständig ist.
- Object Key: Ein bestimmter Wert, der von einem Agenten zur Verfügung gestellt wird und zur Erzeugung einer IOR dient.
- IOR: Interoperable Object Reference:
Dient zur eindeutigen Adressierung von CORBA-Objekten auf der Basis von IIOP-Protokollen;
- Target Address: Ab GIOP Version 1.2 ist der Begriff "Target Address" eingeführt worden, der mehrere unterschiedliche Adressierungsverfahren für ein Objekt beschreibt. Von der prinzipiellen Funktionalität her kann "Target Address" und der vorher ausschließlich verwendete Object Key als gleichartig betrachtet werden;
- Type Code: Beschreibung einer Datenstruktur innerhalb eines ORBs.
- Client: eine Rolle, die ein Prozeß innerhalb der verteilten Applikation einnehmen kann. Ein Client ist ein Agent, der eine Verbindung zu einem Server öffnet.
- Server: eine Rolle, die ein Prozeß innerhalb einer verteilten Applikation einnehmen kann. Ein Server ist ein Agent, zu dem eine Verbindung von einem Client aufgebaut wird.
- Adresse: eine eindeutige Bezeichnung eines Hosts in den Ausführungsbeispielen.
- verteilte: CORBA Applikation:
Besteht aus mehreren auf unterschiedlichen Hosts aufgeteilte Prozesse, die über eine in IDL definierte Schnittstelle GIOP Nachrichten austauschen;
- IDL: objektorientierte
Schnittstellenbeschreibungssprache;
- CDR: Common Data Representation
- Anforderung/Request: eine bestimmte GIOP-Nachricht, die einen Methodenaufruf vom Client zum Server überträgt.
- Antwort/Reply: eine bestimmte GIOP-Nachricht, die vom Server zum Client als Folge eines vorhergehenden Requests übertragen wird.
- Prozeß: Speicherinstanz eines Programms auf einem Host.

- Interface: Die in IDL definierte Beschreibung eines CORBA Objekts, dessen Instanz über den Agent im Server in Form von Methodenaufrufen angesprochen werden kann.
- Decoder: Ein System zur Umwandlung der in einer PDU codierten Information in eine lesbare Darstellung der enthaltenen Nachricht. In dem Kontext des vorliegenden Ausführungsbeispiels handelt es sich hierbei um ein System, daß das erfindungsgemäße Verfahren verwendet.
- Signatur: Ein Begriff, der von Programmiersprachen geprägt wurde. Gleichnamige Methoden können sich aufgrund unterschiedlicher Parameter voneinander unterscheiden. Diese Unterscheidungskriterien werden als Signatur bezeichnet. IDL schließt die Definition gleichnamiger Methoden innerhalb des gleichen Kontextes aus, so daß die Signatur einer Methode nicht mit codiert werden muß.
- IFR: Interface Repository:
Eine im COBRA Standard definierte Möglichkeit, Information über eine IDL-Definition für spätere Zugriffe verfügbar zu machen.

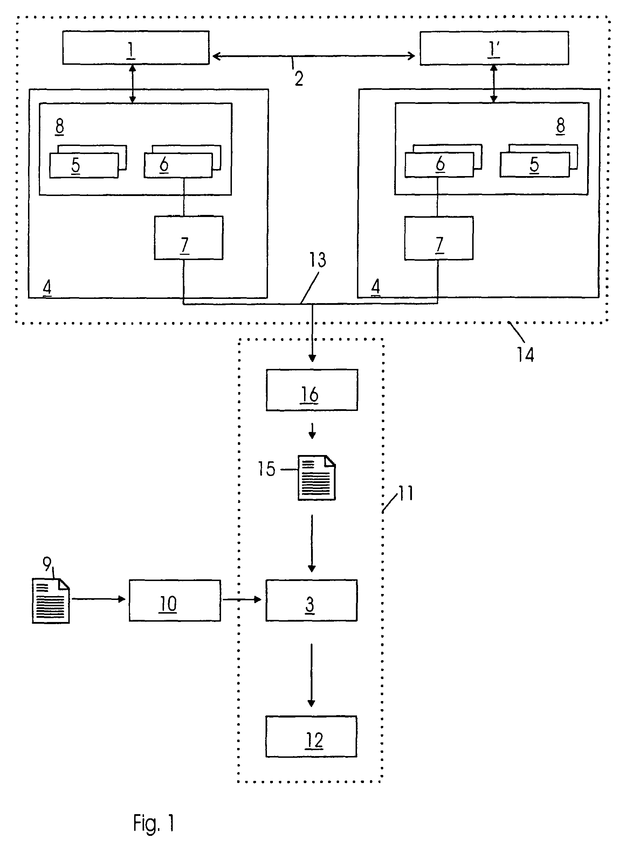

In Fig. 1 ist eine grundsätzliche Variante des erfindungsgemäßen Verfahrens und insbesondere seiner Anwendung gezeigt. Zwei Komponenten 1 und 1' einer verteilten CORBA-Applikation 14 kommunizieren miteinander und untereinander, wobei jeweils eine Komponente 1 oder 1' in einer Client-Rolle und die andere in einer Server-Rolle agiert und arbeitet. Es wird angenommen, daß beide Komponenten 1 und 1' auf unterschiedlichen Host-Anlagen laufen, so daß die Nachrichten über Internet Inter-ORB-Protokoll IIOP 2 übertragen werden müssen. Hierbei wird zwischen den beiden beteiligten Object Request Brokern 6 eine TCP/IP Verbindung 13 aufgebaut und die Internet Inter-ORB-Protokoll 8 -Dateneinheit (IIOP-PDU) wird über diese Verbindung übertragen. Während innerhalb der Object Request Broker 4 durch eine Schnittstelle 8 eine exakte Beschreibung eines Wertes 6 in Form eines sogenannten Type Codes 5 vorliegt, der die Beschreibung einer Datenstruktur innerhalb eines ORBs 4 darstellt, wird bei der Protokolldateneinheit (PDU) auf das Mitsenden des Type Codes 5 verzichtet. Das Decodieren eines Wertes im jeweiligen anderen Object Request Broker 4 über einen CDR Decoder 7 der Schnittstelle 8 funktioniert deshalb, weil dort alle notwendigen Informationen, zum Beispiel Request_id, "Target Address" und Name der aufgerufenen Methode, vorliegen. Mit diesen Informationen kann die Protokolldateneinheit (PDU) einem Objekt zugeordnet werden. Die zur Decodierung im GIOP Decoder 3 benötigten Type Codes 5 lassen sich durch die dem Objekt zugeordnete Interface Definition ermitteln. Der GIOP Decoder 3 ist Teil eines passiven CORBA Analysators 11, bekommt noch Informationen von einer IDL Datei 9 über ein CORBA Interface Repository 10 und liefert die GIOP Nachricht 12.

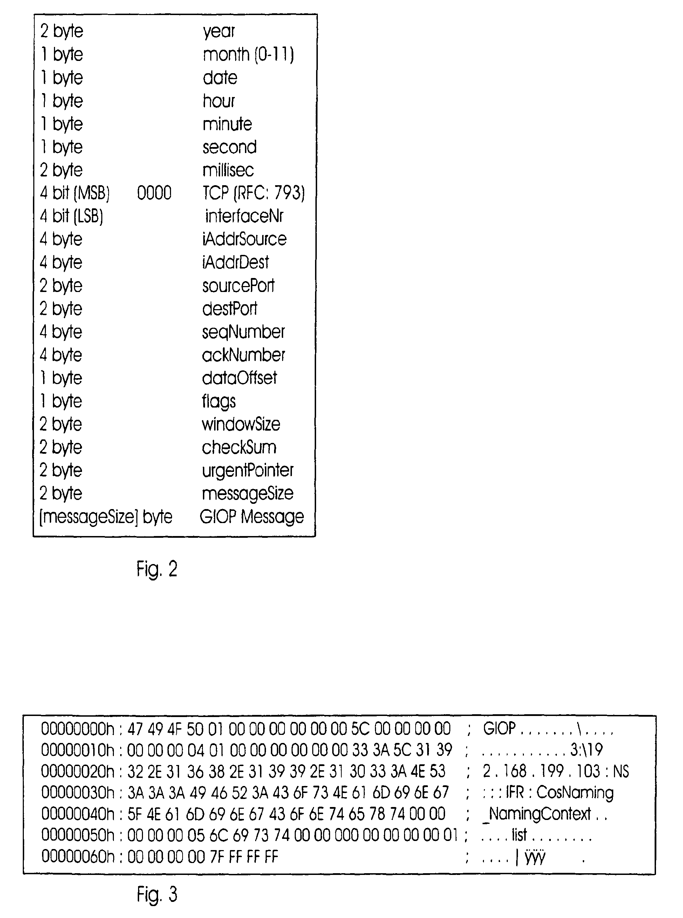

In Fig. 2 ist dargestellt, wie ein solches Trace-Tool die mitgelesenen Protokolldateneinheiten (PDU) zur weiteren Auswertung übergeben soll. Das Mitlesen von Protokolldateneinheiten (PDU) an mehreren Punkten eines Systems, zum Beispiel Hosts, kann gleichzeitig erfolgen.

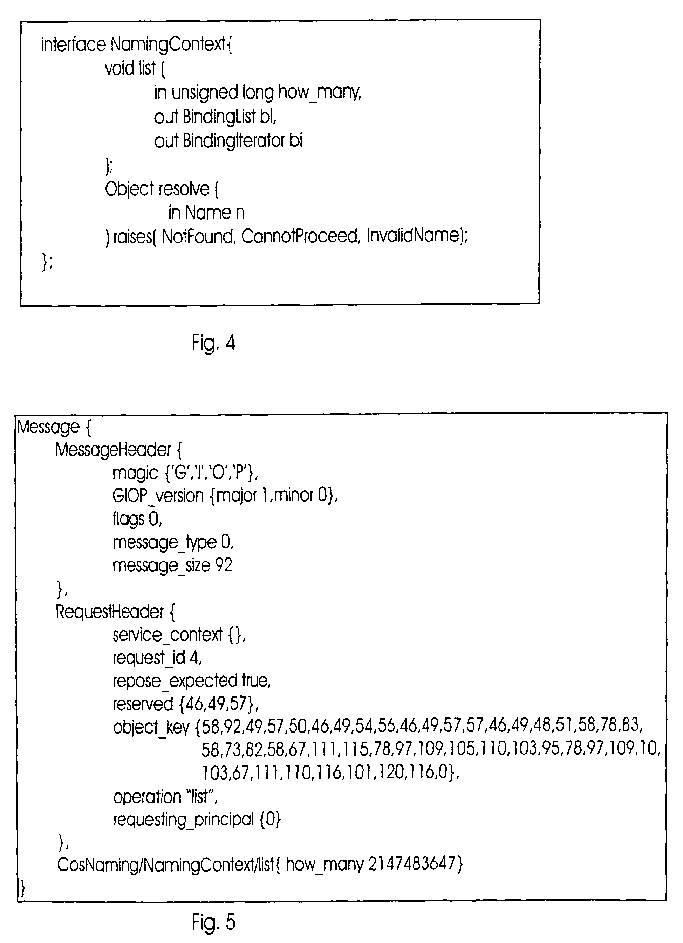

In Fig. 3 ist dargestellt, daß es mit dem im folgenden noch näher beschriebenen Verfahren anhand eines Beispiels möglich ist, allein basierend auf den mitgelesenen Protokolldateneinheiten (PDU), der Verbindungsparameter und der zugehörigen IDL-Definition gemäß Fig. 4 die General Inter-ORB Protokoll Dateneinheiten (GIOP-PDU) vollständig zu decodieren, wie es in Fig. 5 dargestellt ist.

Aufgrund der spezifischen Informationen des benutzten verbindungsorientierten Protokolls ist es möglich, eine aufgezeichnete General Inter-ORB-Protokoll Nachricht den beiden kommunizierenden Agenten bzw. Komponenten 1 und 1' zuzuordnen. Über die in einer Anforderung/Request codierte Zieladresse ist es weiterhin möglich, das adressierte CORBA-Objekt eindeutig zu identifizieren. Eine Antwort/Reply kann aufgrund der mitgesendeten "Reply id" an der Tatsache, daß die Antwort über die gleiche Verbindung geschickt wird wie die zugehörige Anforderung, entsprechend eindeutig zugeordnet werden.

Bei der Analyse einer Protokolldateneinheit (PDU) durch einen passiven GIOP-Decoder 3 besteht ein Problem, dessen Lösung im folgenden beschrieben wird.

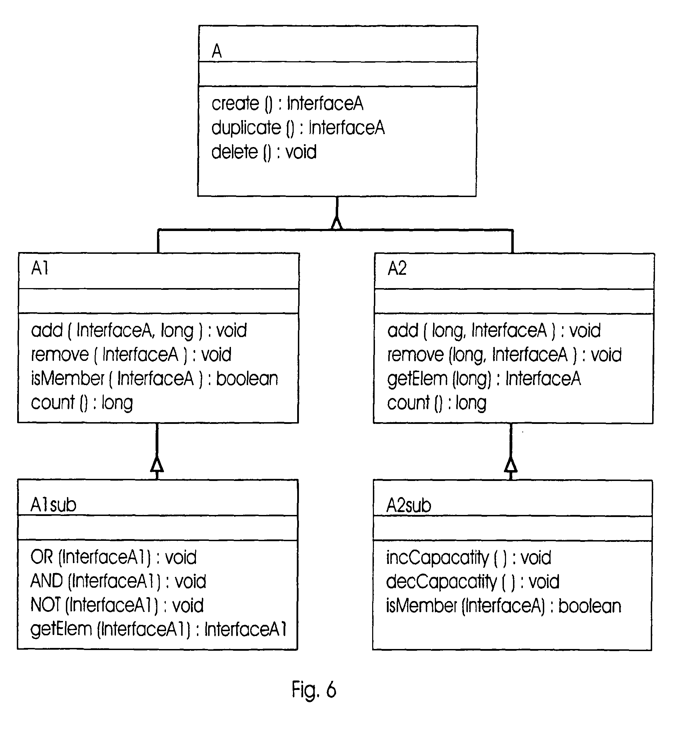

In einer mitgeschriebenen Anforderungsprotokolldateneinheit (Request-PDU) ist nur der Name der aufzurufenden Methode selbst enthalten, jedoch weder deren IDL-Definition noch der Name des Interfaces, daß dem angesprochenen Objekt zugrunde liegt. Somit fehlen die für das Decodieren einer Protokolldateneinheit (PDU) notwendigen Informationen. Das in Fig. 6 dargestellte Ausführungsbeispiel zeigt ein Verfahren, mit dessen Hilfe der GIOP-Decoder 3 die empfangenen Protokoll-Dateneinheiten (PDU) trotzdem decodieren kann.

In Fig. 6 sind Interface Definitionen in UML-Darstellung enthalten.

Wie bereits ausgeführt wurde, reicht die Information, daß die Methode "Count" aufgerufen wurde, nicht aus, um zu entscheiden, ob Interface A1, Interface A2 oder eine der von diesen Definitionen erbenden Interface Definitionen dem angesprochenen Objekt zugrunde liegt. Ebensowenig würde der Aufruf der Methode getElem eindeutig entscheiden, welche Interface Definition dem Objekt zugrundeliegt. Jedoch sind andere Interface Definitionen durchaus im Rahmen des vorliegenden Verfahrens möglich. Die Grundidee des vorliegenden Verfahrens besteht deshalb darin, die einzelnen aus den Protokolldateneinheiten (PDU) stammenden unvollständigen Informationen individuell für jedes einzelne Objekt zu sammeln und zu korrelieren. Damit wird aus mehreren notwendigen Bedingungen ein hinreichendes Auswahlkriterium für die bei der Decodierung zugrunde zulegende Interface Definition gewonnen.

Bezogen auf ein einzelnes Objekt können dabei die folgenden Phasen im GIOP-Decoder 3 unterschieden werden:
1. Initialisieren:
   Anlegen von Listen mit allen in Frage kommenden Interface Definitionen. Die Listen werden spezifisch für eine bestimmte Host, einen bestimmten Agenten, das heißt eine Instanz, die für das Versenden und Empfangen von GIOP-Nachrichten zuständig ist, oder einer agentenspezifischen Zieladresse abgelegt. Wenn keine Zusatzinformationen bekannt sind, dann ist im allgemeinsten Fall nur die Liste aller im Gesamtsystem verwendeten Interface Definitionen zu initialisieren.
2. Lernen:
   Anwenden von Anschlußkriterien, um die Zahl der Möglichkeiten zu reduzieren, wobei die ausgewertete Nachricht noch nicht eindeutig decodiert werden kann. In einem solchen Fall gibt es mehr als eine Interface Definition, die einem bestimmten Objekt zugrunde liegen kann.
3. Decodieren:
   Es ist eindeutig bestimmt worden, welche Interface Definition dem Objekt zugrunde liegt. Daher kann die vom Objekt versendete oder die zum Objekt gesendete Nachricht decodiert werden.

Prinzipiell gibt es insbesondere zwischen der Phase 2 und 3 keine eindeutige Trennung. Es kann vorkommen, daß teilweise von Phase 3 zurück in Phase 2 gesprungen werden muß. Alle Nachrichten, die nicht decodiert werden können, da Phase 3 noch nicht erreicht ist, können entweder nur undecodiert ausgegeben werden oder die Decodierung muß zu einem späteren Zeitpunkt nachgeholt werden. Eine besonders einfache und vorteilhafte Ausgestaltung besteht darin, erst die Phase 2 mit allen aufgezeichneten Protokolldateneinheiten (PDU) durchzuführen, um anschließend alle diese Protokolldateneinheiten (PDU) nocheinmal in der Phase 3 zu decodieren.

Beim Austausch einer interoperablen Object Reference (IOR), die zur eindeutigen Adressierung von CORBA-Objekten auf der Basis des IIOP-Protokolls dient, werden Informationen vom Server zum Client übertragen. Mit Kenntnis dieser Informationen kann die spätere Decodierung der GIOP-Nachrichten wesentlich erleichtert werden. Allerdings ist der Austausch einer interoperablen Objekt Referenz (IOR) zwar eine Voraussetzung für den nachfolgenden Nachrichtenaustausch, aber kein Bestandteil dessen. Aus diesem Grund ist es hilfreich, weitere IIOP-Verbindungen, zusätzlich zu der eigentlichen Client-Server-Verbindung gezielt zu protokollieren/tracen und in die anschließende Decodierung einzubeziehen. Das setzt jedoch zusätzliche Kenntnisse über das zu untersuchende System voraus. Besonders interessant sind dafür die Verbindungen zu einem Naming-Service oder zu einem Implementation Repository.

Eine vorteilhafte Ausgestaltung des beanspruchten Verfahrens besteht noch darin, daß die durch das gezielte Protokollieren/Aufzeichnen und Decodieren gewonnenen Informationen bezüglich der aktiven Server, der zugrundeliegenden Interface Definition und der zugehörigen Adresse an eine systemfremde Client-Implementierung weitergereicht werden. Aufgrund dieser Vorgehensweise ist es möglich, ohne das vorherige Laden oder Anfordern einer Objektreferenz in die Kommunikation der verteilten Applikationen einzugreifen. Hiedurch wird ein Problem vermieden, das viele aktive Testapplikationen haben, nämlich das Erlangen einer Objektreferenz, wenn diese nicht außerhalb der verteilten Applikation bekannt ist.

Im nachfolgenden werden nun noch einige Sonderfälle unter bestimmten Bedingungen beschrieben.

Im ersten Fall wird angenommen, daß die aufgerufene Methode und die zugehörige Interface Definition nicht im Interface Repository (IFR) abgespeichert ist. Dabei wird angenommen, daß nicht alle in der verteilten Applikation verwendeten Interface Definitionen im Interface Repository (IFR) des GIOP Decoders 3 abgelegt sind. In diesem Fall wird angenommen, daß im Interface Repository (IFR) überhaupt keine Methode mit dem richtigen Namen definiert ist. Es wird deshalb eine Methode AND in einer Request Protokolldateneinheit (PDU) aufgerufen und so kann anhand der im Interface Repository (IFR) vorhandenen Interface Definitionen (zum Beispiel Interface A, Interface A1 und A2) weder die Zahl der möglichen Interface Definitionen für das angesprochene Objekt eingeschränkt werden noch kann irgendeine Information bezüglich der Decodierung dieser Protokolldateneinheit (PDU) gewonnen werden. Diese Protokolldateneinheit (PDU) kann daher auch nicht in decodierter Form dargestellt werden.

Im zweiten Sonderfall wird unterstellt, daß die in einem A1Sub definierte Methode getElem in der Anforderungsprotokolldateneinheit codiert ist. Es wird außerdem angenommen, daß gleichzeitig in A2 ebenfalls eine Methode getElem definiert ist. Sollte die Interface-Definition A2 noch in der Menge möglicher Interface-Definitionen für die betrachtete Anforderung sein, so wird der GIOP Decoder 3 feststellen, daß die codierte GIOP Nachricht nicht mit der Definition A2: getElem decodiert werden kann. Aufgrund dessen kann der GIOP Decoder 3 ausschließen, daß das Interface A2, sowie alle davon vererbten Definitionen, zu der Menge der für das angesprochene Objekt möglichen Interface Definitionen gehört. Es können also in diesem Beispiel die Definitionen A2 sowie A2Sub ausgeschlossen werden, wobei jedoch A2Sub ohnehin nicht im GIOP Decoder 3 betrachtet würde.

Im dritten Sonderfall A3 wird angenommen, daß die aufgerufene Methode und die zugehörige Interface Definition im Interface Repository (IFR) abgespeichert ist. Die dazu kompatible Definition ist allerdings außerhalb des Interface Repository IFR in einer anderen Interface-Definition vorhanden. Die Anforderung, die eine Methode A2 "Sub::ismember" aufruft, wird irrtümlich durch das Verfahren der Interface Definition A1 zugeordnet, da diese Definition die einzige im Interface Repository (IFR) ist, die diese Methode enthält. Somit kann zwar die Protokolldateneinheit (PDU) korrekt dekodiert werden, aber zukünftige Anforderungen können aufgrund falscher Daten über die für das Objekt verwendete Interface Definition nicht dekodiert werden. Um dieses Fehlverhalten auszuschließen, sind folgende zwei prinzipielle Verfahrensweisen realisierbar:
1. Der Bediener des GIOP Decoders 3 muß sicherstellen, daß alle in der verteilten Applikation verwendeten IDL Definitionen im Interface Repository (IFR) abgelegt werden. Würde in diesem Beispiel auch A2 Sub im Interface Repository IFR bekannt sein, dann würde die beschriebene Fehlentscheidung nicht auftreten.
2. Der GIOP Decoder 3 wird manuell so konfiguriert, daß aufgrund von Sperrlisten bestimmte Anforderungen, die über den enthaltenen Methodennamen identifiziert werden, nicht zum Ausschluß von Interface Definitionen verwendet werden.

In zwei weiteren Sonderfällen B1 und B2 wird davon ausgegangen, daß eine Anforderungsprotokolldateneinheit (PDU) nicht eindeutig einer einzigen Interface Definition zugeordnet werden kann, daß aber bereits ein Decodieren der Protokolldateneinheit möglich ist, da nur noch identische Methodendefintionen in den unterschiedlichen Interface-Definitionen zur Auswahl stehen. Im Sonderfall B1 ist das Decodieren dennoch möglich, da die Fähigkeit über einen gemeinsamen Vorfahren geerbt wird. Die Methodendefinition ist somit nicht nur gleich, sondern sogar identisch und bis eine nähere Präzisierung möglich ist, kann davon ausgegangen werden, daß die Definition A dem Objekt zugrunde liegt.

In dem Sonderfall B2 wird angenommen, daß mehrere Interface Definitionen ohne gemeinsamen Vorfahren möglich sind. Deshalb tritt der Fall ein, daß eine bestimmte Methode zwar nicht über einen gemeinsamen Vorfahren geerbt wurde, jedoch die Definition mehrfach vorhanden ist, so daß auch ohne eine Entscheidung ob A1:X oder A2:X gemeint war, ein Decodieren der Anforderung möglich ist.

Als letztes soll noch ein Sonderfall C beschrieben werden, in dem sich eine Anforderung auf Basis mehrerer unterschiedlicher Methodendefinitionen decodieren läßt. Da sich die Definitionen unterscheiden würde das Decodieren der Protokolldateneinheit (PDU) jeweils eine andere Nachricht als Ergebnis bringen. Somit kann die Protokolldateneinheit (PDU) nur dann decodiert werden, wenn aufgrund anderer Protokolldateneinheiten (PDU) die inkompatiblen Definitionen ausgeschlossen werden können.

Im nachfolgenden wird noch ein prinzipieller Ablauf des Verfahrens in vereinfachter Form als Pseudo-Code dargestellt, beschrieben.

Es wird vereinfachend davon ausgegangen, daß TCP als Transportprotokoll verwendet wurde. Ebenso wird vereinfachend davon ausgegangen, daß es nur die GIOP-Nachrichtentypenanforderung Request und Reply gibt. An der prinzipiellen Funktionsweise des Verfahrens ändert sich jedoch dadurch nichts.
1. Lese nächste TCP Nachricht
2. Bestimme den Nachrichten Typ
   2.1. Bei Request mache weiter mit 3
   2.2. Bei Reply mache weiter mit 4
3. Decodiere Request
   3.1. Bestimme COBRA Agent aus Feldern iAddrDest und DestPort
   3.2. Ermittle den Namen der aufgerufenen Methode aus der GIOP Codierung
   3.3. Ermittle Liste mit allen für diesen Agent unter der verwendeten object_key möglichen Interface Definition
      3.3.1. Falls keine Liste gespeichert, erzeuge neue Liste, die alle im IFR gespeicherten Interface Definitionen enthält.
      3.3.2. Lade Liste
   3.4. Falls der Methodenname sich in einer Liste gesperrter Methoden befindet überspringe den Punkt 3.5 und mache weiter bei Punkt 3.6
   3.5. Aktualisiere die Liste
      3.5.1. Entferne alle Elemente aus der Liste, in der die aktuelle Methode in der Interface Definition nicht zulässig ist
         3.5.1.1. Wenn die Methode in keiner einzigen Interface Definition gespeichert ist, trifft Sonderfall A1 zu. Mache Schritt Rückgängig und weiter mit 1
         3.5.1.2. Wenn die Methode in keinem der Interface Definitionen so gespeichert ist, daß die aktuelle Nachricht decodiert werden kann, trifft Sonderfall A2 zu. Entferne in diesem Fall nur die Elemente, die diese inkompatible Methode definieren und mache weiter mit 1
         3.5.1.3. Entferne alle Elemente, die diese Methode inkompatibel oder gar nicht definieren
      3.5.2 Speichere die aktualisierte Liste
   3.6. Decodiere Nachricht
      3.6.1. Falls nur noch eine Interface Definition in der Liste gespeichert ist, nehme diese zur Decodierung der Nachricht. Weiter mit 3.7
      3.6.2. Falls eine eindeutige hierarchische Vererbungsbeziehung unter den in der Liste enthaltenen Interface Definitionen besteht, trifft Sonderfall B1 zu. Nehme in diesem Fall die IDL Definition des in der Liste enthaltenen gemeinsamen Vorfahren. Weiter mit 3.7.
      3.6.3. Falls die betreffende Methode in den in der Liste enthaltenen Interface Definitionen gleich definiert wurden, trifft Sonderfall B2 zu. Nehme in diesem Fall eine beliebige enthaltene IDL Definition zur Decodierung. Weiter mit 3.7.
      3.6.4. Sonderfall C trifft zu: Die Nachricht ist derzeit nicht eindeutig decodierbar. Weiter mit 1.
   3.7. Speichere Information für decodieren des Reply unter einer aus "iAddrSource", "SourcePort"' "iAddrDest" und "DestPort" gebildeten Kennung ab.
   3.8. Weiter mit 1
4. Decodiere Reply
   4.1. Bestimme CORBA Agent aus Feldern iAddrSource und SourcePort
   4.2. Wenn zugehöriger Request nicht unter einer aus iAddrDest, DestPort, iAddrSource und SourcePort gebildeten Kennung abgespeichert ist, weiter mit 1
   4.3. Lade zugehörigen Request
   4.4. Nehme IDL Definition des Request und decodiere den Reply
   4.5. Weiter mit 1

### Liste der in der Zeichnung verwendeten Bezugszeichen

- 1,1': Komponenten einer über IIOP auf Client/Server verteilten CORBA-Applikation
- 2: IIOP Internet Inter ORB Protokoll
- 3: GIOP Decoder
- 4: Object Request Broker
- 5: Typenbezeichnung oder -code
- 6: Wert (Value)
- 7: CDR Codierer
- 8: Schnittstelle
- 9: IDL File
- 10: CORBA IFR
- 11: passiver CORBA Analysator
- 12: GIOP Nachricht
- 13: TCP Verbindung
- 14: verteilte CORBA Applikation
- 15: TCP/IP Speicherauszug (Dump) mit GIOP PDUs
- 16: Trace Tool

## Patentansprüche

1. Verfahren zur Analyse gesendeter Protokolldateneinheiten, PDU, eines Protokolls zur Kommunikation zwischen zwei Object Request Brokern (4), um eine möglichst vollständige Darstellung der enthaltenen Nachrichten zu erhalten, wobei zwei Komponenten (1, 1') beispielsweise einer verteilten CORBA Applikation (14) untereinander kommunizieren, und jeweils eine Komponente (1, 1') in einer Client-Rolle und die andere in einer Server-Rolle agiert und beide Komponenten auf unterschiedlichen Hosts installiert sind, **dadurch gekennzeichnet,**
**daß** die aus den einzelnen Protokolldateneinheiten PDU stammenden unvollständigen Informationen individuell für jedes einzelne Objekt gesammelt und korreliert werden,
damit wird aus mehreren notwendigen Bedingungen ein hinreichendes Auswahlkriterium für die bei Decodierung zugrundezulegende Interface Definition gewonnen
**daß** die Decodierung in drei Phasen erfolgt,
**daß** die erste Phase eine Initialisierungsphase ist in der das Anlegen von Listen mit allen in Frage kommenden Interface Definitionen erfolgt,
**daß** die zweite Phase eine Lernphase ist, in der Ausschlußkriterien zur Reduzierung der Zahl der Möglichkeiten eingeführt werden, wobei eindeutig bestimmt wird, welche Interface Definition dem Objekt zugrunde liegt und
**daß** in der dritten Phase, einer Dekodierphase, die vom Objekt versendete oder die zum Objekt gesendete Nachricht dekodiert wird.

2. Verfahren nach dem Oberbegriff des Patentanspruchs 1,
**dadurch gekennzeichnet,**
**daß** zunächst ausschließlich passiv durch Mitschreiben der ausgetauschten Informationen diese zur Analyse gesammelt werden,
**daß** die ausgetauschten Informationen, PDU, auf Basis der in der verteilten Applikation (14) benutzten IDL Definition dekodiert werden,
**daß** einige der vorhandenen Mehrdeutigkeiten unmittelbar durch Eindeutigkeit des codierten Methodennamens oder dessen eindeutiger Parametrisierung ausgeschlossen werden und
**daß** Mehrdeutigkeiten, die nicht mit den in einer einzelnen Protokolldateneinheit, PDU, codierten Informationen auszuschließen sind, systematisch über mehrere Protokolldateneinheiten eines General Inter-ORB Protokolls, GIOP-PDU, iterativ aufgelöst werden.

3. Verfahren nach Patentanspruch 1, **dadurch**
**gekennzeichnet,**
**daß** erst die Phase zwei mit allen aufgezeichneten Protokolldateneinheiten, PDU, ausgeführt wird und daß anschließend alle diese Protokolldateneinheiten PDU, nocheinmal in der Phase drei dekodiert werden.

4. Verfahren nach einem der Patentansprüche 1 bis 3,
**dadurch gekennzeichnet,**
**daß** zur Festlegung der Interface-Definitionen, die benutzt werden, eine Einschränkung der initialen Möglichkeiten in einer Vorphase für einen bestimmten Agenten, im Internet Inter-ORB-Protokoll (8) durch eine IP Adresse und einen TCP Port (13) festgelegt, konfiguriert wird.

5. Verfahren nach einem der Patentansprüche 1 bis 3,
**dadurch gekennzeichnet,**
**daß** zur Einschränkung der initialen Möglichkeiten, welche Interface Definitionen verwendbar sind, in einer Vorphase für einen bestimmten Host, im Internet Inter-ORB-Protokoll (8) durch eine IP-Adresse festgelegt, konfiguriert wird.

6. Verfahren nach einem der Patentansprüche 1 bis 5,
**dadurch gekennzeichnet,**
**daß** Protokolldateneinheiten, PDU, die aufgrund fehlender Informationen nicht dekodierbar sind, in eine Warteschlange gestellt werden und
**daß** sie zu einem späteren Zeitpunkt, wenn diese Informationen aufgrund anderer dekodierter Protokolldateneinheiten, PDU, gewonnen wurden, dekodiert werden.

7. Verfahren nach einem der Patentansprüche 1 bis 6,
**dadurch gekennzeichnet,**
**daß** aufgrund von Sperrlisten bestimmte Anforderungen, die über den enthaltenen Methodennamen identifiziert werden können, nicht zum Ausschluß von Interface Definitionen wirksam werden.

8. Verfahren nach einem der Patentansprüche 1 bis 7,
**dadurch gekennzeichnet,**
**daß** das fehlerhafte Decodieren einer
Protokolldateneinheit, PDU, aufgrund einer optionalen Einstellung des GIOP Dekodierers (3) nicht zwingend zu einem Ausschluß der zugrunde liegenden Interface Definition führt und
**daß** auch bei vereinzelten Codierungsfehlern die korrekt codierten Methoden noch dekodierbar sind.

9. Verfahren nach einem der Patentansprüche 1 bis 8,
**dadurch gekennzeichnet,**
**daß** der Inhalt der im CORBA Standard definierten Methoden, die Informationen über die dem Objekt zugrundeliegenden Interface Definitionen liefern, ausgewertet wird, um die Zahl der möglichen Interface Definitionen für das angesprochene Objekt einzuschränken.

10. Verfahren nach einem der Patentansprüche 1 bis 9,
**dadurch gekennzeichnet,**
**daß** die mitgeschriebenen Protokolldateneinheiten, PDU, des General Inter ORB Protocols, GIOP, durch das Internet Inter ORB Protocol, IIOP, übertragen werden.

11. Verfahren nach einem der Patentansprüche 1 bis 10,
**dadurch gekennzeichnet,**
**daß** die durch das Decodieren von Nachrichten des General Inter ORB Protocols, GIOP, erhaltenen Informationen über aktive Server dazu verwendet werden, mittels einer systemfremden Client Applikation eine Verbindung zu diesen Servern aufzubauen und Anforderungen, zum Beispiel CORBA Requests, an diese Server zu schicken.

## Claims

1. Method for analyzing transmitted protocol data units, PDU, of a protocol for communication between two object request brokers (4) in order to obtain the most complete representation possible of the messages contained, wherein two components (1, 1') of, for example, a distributed CORBA application (14), communicate with one another, and in each case one component (1, 1') acts in a client role and the other acts in a server role, and the two components are installed on different hosts, **characterized**
**in that**
the incomplete information items originating from the separate protocol data units, PDU, are individually collected and correlated for each individual object,
thus a sufficient criterion for selecting the interface definition underlying the decoding is obtained from multiple necessary conditions,
**in that** the decoding takes place in three phases,
**in that** the first phase is an initialization phase when lists are created with all potential interface definitions,
**in that** the second phase is a learning phase when exclusion criteria are introduced to reduce the number of possibilities, wherein the interface definition underlying the object is unambiguously determined, and
**in that** during the third phase, a decoding phase, the message transmitted from the object or transmitted to the object is decoded.

2. Method according to the preamble of claim 1, **characterized in that**
the exchanged information items are initially collected for analysis in an exclusively passive manner by monitoring said information,
**in that** the exchanged information items, PDU, are decoded on the basis of the IDL definition used in the distributed application (14),
**in that** some of the ambiguities present are immediately excluded by the uniqueness of the encoded method name or its unique parameterization, and
**in that** ambiguities which cannot be ruled out with the information encoded in an individual protocol data unit, PDU, are systematically resolved in an iterative manner using multiple protocol data units of a General Inter-ORB Protocol, GIOP-PDU.

3. Method according to claim 1, **characterized in that**
phase two is first carried out with all recorded protocol data units, PDU, and
**in that** all of these protocol data units, PDU, subsequently are decoded again in phase three.

4. Method according to any one of claims 1 through 3, **characterized in that**
in order to determine the interface defmitions to be used, a limitation of the initial possibilities is configured in a preliminary phase for a specific agent, defined in the Internet Inter-ORB Protocol (8) by an IP address and a TCP port (13).

5. Method according to any one of claims 1 through 3, **characterized in that**
in order to limit the initial possibilities, the usable interface definitions are configured in a preliminary phase for a specific host, defined in the Internet Inter-ORB Protocol (8) by an IP address.

6. Method according to any one of claims 1 through 5, **characterized in that**
protocol data units, PDU, that cannot be decoded on account of missing information are placed in a queue, and
**in that** such protocol data units are decoded at a later point in time when said information has been obtained on the basis of other decoded protocol data units, PDU.

7. Method according to any one of claims 1 through 6, **characterized in that**
with exclusion lists used as a basis, specific requests identifiable by the contained method names are not used to rule out interface definitions.

8. Method according to any one of claims 1 through 7, **characterized in that**
faulty decoding of a protocol data unit, PDU, on the basis of an optional setting of the GIOP decoder (3) does not necessarily result in exclusion of the underlying interface definition, and
**in that** the correctly encoded methods can still be decoded even in the event of isolated encoding errors.

9. Method according to any one of claims 1 through 8, **characterized in that**
the content of the methods defined in the CORBA standard that provide information on the interface definitions underlying the object is analyzed in order to limit the number of possible interface definitions for the object in question.

10. Method according to any one of claims 1 through 9, **characterized in that**
the monitored protocol data units, PDU, of the General Inter-ORB Protocol, GIOP, are transmitted using the Internet Inter-ORB Protocol, IIOP.

11. Method according to any one of claims 1 through 10, **characterized in that**
the information concerning active servers obtained by decoding messages of the General Inter-ORB Protocol, GIOP, is used to establish a connection to these servers by means of a client application foreign to the system and to send requests, for example CORBA requests, to these servers.

## Revendications

1. Procédé d'analyse d'unités de données de protocole, PDU, envoyées au niveau d'un protocole de communication entre deux Object Request Broker (4), afin d'obtenir une représentation la plus complète possible des messages contenus, sachant que deux composantes (1, 1') d'une application CORBA distribuée (14), par exemple, communiquent entre elles et que l'une des composantes (1, 1') joue le rôle de client tandis que l'autre joue le rôle de serveur, les deux composantes étant installées sur des hôtes différents, **caractérisé en ce que**
les informations incomplètes provenant des différentes unités de données de protocole, PDU, sont collectées et mises en corrélation individuellement pour chacun des objets
afin d'obtenir, à partir de plusieurs conditions nécessaires, un critère de choix suffisant pour la définition d'interface destinée à servir de base au décodage,
le décodage s'effectue en trois phases,
la première phase est une phase d'initialisation au cours de laquelle sont créées des listes de toutes les définitions d'interface entrant en ligne de compte,
la deuxième phase est une phase d'apprentissage au cours de laquelle des critères d'exclusion sont introduites pour réduire le nombre de possibilités et afm de déterminer de manière non équivoque sur laquelle définition d'interface s'appuie l'objet,
le message envoyé par l'objet ou envoyée à l'objet est décodé au cours de la troisième phase, qui est une phase de décodage.

2. Procédé selon le terme générique de la revendication 1, **caractérisé en ce que**
les informations échangées sont collectées pour analyse, d'abord de manière exclusivement passive, au moyen de l'enregistrement desdites informations,
les informations échangées, PDU, sont décodées sur la base de la définition IDL utilisée dans l'application distribuée (14),
certaines des ambiguïtés existantes sont directement exclues par le caractère non équivoque du nom de méthode codé ou du paramétrage non équivoque de ce dernier,
les ambiguïtés qui ne peuvent pas être exclues avec les informations codées dans une seule unité de données de protocole, PDU, sont systématiquement résolues de manière itérative par l'intermédiaire de plusieurs unités de données de protocole au niveau d'un protocole de général Inter-ORB, GIOP-PDU.

3. Procédé selon la revendication 1, **caractérisé en ce que**
d'abord la deuxième phase est exécutée avec toutes les unités de données de protocole, PDU, enregistrées et qu'ensuite toutes ces unités de données de protocole sont décodées encore une fois au cours de la troisième phase.

4. Procédé selon l'une des revendications 1 à 3, **caractérisé en ce que**
pour déterminer les définitions d'interface utilisées, on configure une restriction des possibilités initiales au cours d'une phase préliminaire pour un agent donné, défini par une adresse IP et un port TCP (13) dans le protocole Internet Inter-ORB (8).

5. Procédé selon l'une des revendications 1 à 3, **caractérisé en ce que**
pour restreindre les possibilités initiales, on configure les définitions d'interface utilisables au cours d'une phase préliminaire pour un hôte donné, défini par une adresse IP dans le protocole Internet Inter-ORB (8).

6. Procédé selon l'une des revendications 1 à 5, **caractérisé en ce que**
des unités de données de protocole, PDU, indécodables en raison d'informations manquantes sont placées dans une file d'attente,
elles sont décodées ultérieurement lorsque ces informations auront été recueillies sur la base d'autres unités de données de protocole, PDU, décodées.

7. Procédé selon l'une des revendications 1 à 6, **caractérisé en ce que**
en raison de listes de blocage, certaines requêtes, identifiables par l'intermédiaire du nom de méthode contenu, ne deviennent efficaces pour l'exclusion de définitions d'interface.

8. Procédé selon l'une des revendications 1 à 7, **caractérisé en ce que**
le décodage erroné d'une unité de données de protocole, PDU, n'entraîne pas forcément une exclusion de la définition d'interface concernée grâce à un réglage optionnel du décodeur GIOP (3),
les méthodes correctement codées sont toujours décodables même en présence d'erreurs de codage isolées.

9. Procédé selon l'une des revendications 1 à 8, **caractérisé en ce que**
le contenu des méthodes définies dans la norme CORBA, qui fournissent des informations sur les définitions d'interface sous-jacentes à l'objet, est analysé afin de restreindre le nombre possible de définitions d'interface pour l'objet concerné.

10. Procédé selon l'une des revendications 1 à 9, **caractérisé en ce que**
les unités de données de protocole, PDU, enregistrés au niveau du protocole de général Inter-ORB, GIOP, sont transmises par le protocole Internet Inter-ORB, IIOP.

11. Procédé selon l'une des revendications 1 à 10, **caractérisé en ce que**
les informations obtenues par le décodage de messages du protocole de général Inter-ORB, GIOP, sont utilisées, par l'intermédiaire de serveurs actifs, pour établir, moyennant une application client étrange au système, une connexion avec ces serveurs et pour envoyer des requêtes, telles que des requêtes CORBA, à ces serveurs.
